# EUROPEAN PATENT APPLICATION

(11) **EP 1 857 799 A1**
(43) Date of publication of application: **21.11.2007**
(21) Application number: 06713186.2
(22) Date of filing: 07.02.2006
(51) Int. Cl.: G01L 5/00, G01L 1/26

(54) **STRAIN MEASUREMENT DEVICE AND METHOD OF FIXING STRAIN MEASUREMENT ELEMENT**

(30) Priority: 18.02.2005 JP 2005042538
(71) Applicant: SUMITOMO HEAVY INDUSTRIES, LTD., Shinagawa-ku, Tokyo 141-8686 (JP)
(72) Inventor: NAGATA, Yoshihiko c/o Sumitomo Heavy Ind., Ltd., Chiba-shi, Chiba, 2630001 (JP); KOBASHI, Akihisa c/o Sumitomo Heavy Ind., Ltd., Chiba-shi, Chiba, 2630001 (JP)
(74) Representative: Emde, Eric
(86) International application number: PCT/JP2006/302043
(87) International publication number: WO 2006/087936

(57) **Abstract**

In a tie bar strain measuring device, even if an elongation is generated in a belt for attachment, a strain gauge can be pressed against a tie bar continuously with a sufficient pressing force by absorbing the elongation. The strain gauge is fixed to a strain gauge fixing member, and a belt-like member is wound around an outer circumference of the tie bar so as to retain the strain gauge fixing member while pressing against an outer circumferential surface of the tie bar. The belt-like member is clamped by a clamping device. A clamping force is generated by a resilient restoration force of a conical plate spring provided in the clamping device.

## Description

### TECHNICAL FIELD

The present invention relates to a strain measurement technique and, more particularly, to a strain measuring device for measuring a strain of a rod-like member and a fixing method of a strain measuring element.

### BACKGROUND ART

In molding machines such as an injection molding machine, there are many cases in which tie bars which are rod-like members are used as a guiding mechanism for guiding a movement of a movable platen. The tie bars are cylindrical rods (rod-like members), and the movable platen can be reciprocally moved along the tie bars by bushes fitting on the tie bars moving along the tie bars.

For example, when determining a position of the movable platen using a tie bar as a reference, it is needed to consider a strain (mainly an elongation) of the tie bar, and there is a case where it is necessary to measure a strain of the tie bar. Additionally, there is a case where an end side of the tie bar is attached to a stationary platen and a fixed part is attached to the other end and a moving mechanism is attached to the fixed part. In this case, the tie bar receives a pressing fore (a mold-clamping force) of the movable platen, and the mold-clamping force can be measured by measuring a strain of the tie bar.

As mentioned above, there is a demand to measure a strain by attaching a strain measuring element as a strain sensor to a tie bar of a molding machine. Generally, in order to measure a physical amount such as a train (for example, torsion, bending and tension) of a cylindrical (including rod-like) member, a strain gauge is used. Specifically, when measuring a strain of a cylindrical member, a strain gauge is applied onto a side surface of the cylindrical member by using an adhesive or the like. Thereby, a strain is generated in the strain gauge in association with a strain of the cylindrical member.

As mentioned above, when a strain gauge is directly attached to a cylindrical member (tie bar), there is a problem in a durability such that the strain gauge is degraded if it is used continuously over a long period of time since it is not protected by, for example, a protective member or the like. Further, since the strain gauge is attached using an adhesive, it is not only taking a time to attach it to a predetermined position of the cylindrical member (tie bar) but also difficult to attach it to the predetermined position with good accuracy, which causes a problem in that a measurement error is large.

Thus, there is suggested a strain measuring device having a structure in which a strain gauge is attached to a protective member and the strain gauge is pressed against a cylindrical member via the protective member so as to press the strain gauge onto the cylindrical member by clamping the protective member by a band or a belt wound around an outer circumference of the cylindrical member (for example, refer to Patent Document 1) .
Patent Document 1: Japanese Laid-Open Patent application No. 2001-255113

### DISCLOSURE OF THE INVENTION

### PROBLEMS TO BE SOLVED BY THE INVENTION

With the structure which fixes the protective member by clamping it with a band or a belt, the clamping may come loose by an elongation of the band due to aging or a thermal expansion of the band. If the band comes loose largely, the slack of the band can be recognized since the strain gauge cannot operate. In such a case, the band must be clamped again. On the other hand, even if the slack of the band is small, there may be an error generated in a measurement value due to slippage generated between the strain gauge and the cylindrical member. Also in such a case, the band must be clamped again, but there is a problem in that it is difficult to recognize or detect the fact that the clamping of the bad has come loose.

The present invention was made in view of the above-mentioned problem, and it is an object to provide a tie bar strain measuring device and a fixing method of a tie bar strain measuring element according to which, if an elongation is generated in a band for attaching a strain sensor to a tie bar, the strain sensor can be pressed against the tie bar continuously with a sufficient pressing force by absorbing the elongation.

### MEANS TO SOLVE THE PROBLEMS

In order to achieve the above-mentioned objects, there is provided according to the present invention a strain measuring device that measures a strain of a rod-like member, comprising: a fixing member to which a strain measuring element is fixed; a clamping device having a retaining member to retain the fixing member while pressing against an outer circumferential surface of said rod-like member so as to clamp the retaining member on an outer circumference of said rod-like member; and an elastic member provided to the clamping device to generate a pressing force applied to said fixing member by a resilient restoration force.

In the strain measuring apparatus, said fixing member preferably includes a positioning member that position said strain measuring element on the outer circumference surface by engaging with the outer circumferential surface of said rod-like member. Additionally, two pieces of said strain measuring elements may be provided and arranged at diametrically opposing positions by said positioning member in a circumferential direction of said rod-like member. It is preferable that said positioning member is formed in a shape to not interfere with said clamping device when said retaining member is clamped.

Additionally, in the above-mentioned strain measuring device, a process to reduce a coefficient of friction may be applied to a surface of said retaining member. Further, said retaining member may have clamping force detecting means for detecting a state of clamping. Additionally, said clamping device may have an elastic body support member that supports said elastic member, and said elastic member may be provided between the elastic body support member and said fixing member.

Additionally, the above-mentioned strain measuring device may include a support column attached to said elastic body support member and extending between said elastic member and said fixing member, wherein said elastic member may be positioned by the support column. Alternatively, the above-mentioned strain measuring device may include a bolt member attached to said elastic body support member and extending between said elastic member and said fixing member, wherein said elastic member may be arranged between a head part of the bolt member and said elastic body support member, an end part of a thread part of said bolt member may extend by piercing through said elastic body support member, and a nut member may be engaged with an end part of the thread part.

Additionally, there is provided according to another aspect of the present invention a fixing method of a strain measuring element that measures a strain of a rod-like member, comprising: fixing the strain measuring element to a fixing member; sandwiching the fixing member between an outer circumferential surface of said rood-like member and a retaining member; and clamping said retaining member by a clamping force generated by a resilient restoration force of an elastic member so as to retain said strain measuring element while pressing against the outer circumferential surface of said rod-like member.

Additionally, there is provided according to another aspect of the present invention a fixing method of a strain measuring element that measures a strain of a rod-like member, comprising: fixing the strain measuring element to a fixing member; attaching the fixing member to an elastic body support member via an elastic member; attaching a retaining member to an outer circumference of said rod-like member and sandwiching the elastic body support member between an outer circumferential surface of said rod-like member and the retaining member; and retaining said strain measuring element while pressing against the outer circumferential surface of said rod-like member via said elastic member by a resilient restoration force of said elastic member by clamping said retaining member.

Further, there is provided according to another aspect of the present invention a fixing method of a strain measuring element that measures a strain of a rod-like member, comprising: attaching a retaining member, to which an elastic body support member is attached, to an outer circumference of said rod-like member; arranging a fixing member, to which the strain measuring element is fixed, between an elastic member supported by the elastic body support member and said rod-like member; and causing said elastic member to elongate so as to have a restoration force of said elastic member to act on said fixing member by weakening a compression of said elastic member that has been compressed.

### EFFECT OF THE INVENTION

According to the present invention, if an elongation is generated in the belt-like retaining member that clamps the strain measuring element, the elongation is absorbed by the electric member so that the strain measuring element is pressed against the rod-like member continuously with a sufficient pressing force. Accordingly, the measurement of the strain of the rod-like member by the strain measuring element can be carried out with good accuracy for a long period of time.

### BRIEF DESCRIPTION OF THE DRAWINGS

FIG. 1 is a perspective view of a tie bar strain measuring device according to a first embodiment of the present invention.
FIG. 2 is a side view of a tie bar strain measuring device according to a second embodiment of the present invention.
FIG. 3 is a perspective view of the tie bar strain measuring device according to the second embodiment of the present invention.
FIG. 4 is a perspective view of a positioning member shown in FIG. 2.
FIG. 5 is a cross-sectional view of the strain gauge fixing member shown in FIG. 2.
FIG. 6 is a front view of a tie bar strain measuring device according to a third embodiment of the present invention.
FIG. 7 is a side view of the tie bar strain measuring device according to the third embodiment of the present invention.
FIG. 8 is a cross-sectional view of the tie bar strain measuring device according to the third embodiment of the present invention.
FIG. 9 is a cross-sectional view of a tie bar strain measuring device according to a fourth embodiment of the present invention.

### EXPLANATION OF REFERENCE SIGNS

10, 20, 40 tie bar strain measuring device
11, 21, 54 strain gauge
12, 22 stain gauge fixing member
12a inner circumferential surface
13 cable protective member
14, 24 cable
15, 25 belt-like member
15a fixing part
15b scale part
16, 46 bolt
17, 48 nut
18, 28 washer spring
23 tie bar
26 clamping device
27 bolt
29 bolt retaining part
30 washer
31 positioning member
31a concave part
31b belt guide
32 guide
33 guide fixing bolt
42 elastic body support member
42a main body part
42b fixing part
44 retaining member
50 washer spring
52 fixing member
54 strain gauge
56 support column
58, 64 nut member
60 coil spring
62 bolt member
62a head part

### BEST MODE FOR CARRYING OUT THE INVENTION

Next, a description will be given, with reference to the drawings, of modes for carrying out the present invention.

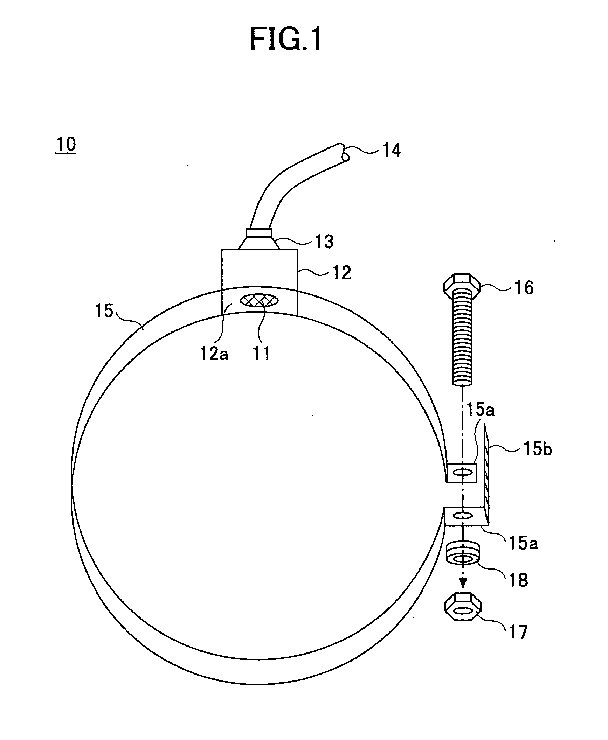

First, a description will be given, with reference to FIG. 1, of a tie bar strain measuring device according to a first embodiment of the present invention. FIG. 1 is a perspective view of a tie bar strain measuring device according to the first embodiment of the present invention. It should be noted that the tie bar strain measuring device is one that is attached to a tie bar of a molding machine to function as a tie bar strain sensor that measures a strain of the tie bar. The tie bar is, for example, a cylindrical member that functions as a guide rail for guiding a movement of a movable platen that is a movable part of a mold moving apparatus. Since the tie bar is widely used in molding machines and well-known member, illustration and description will be omitted.

The tie bar strain measuring device 10 shown in FIG. 1 uses a well-known strain gauge 11 as a strain measuring element. The strain gauge 11 is a sensor that measures an amount of strain by detecting an amount of resistance change due to a strain of a linear resistor element, and it is necessary to be distorted with a strain of a measuring object of which strain is measured. Accordingly, it is necessary to closely contact and fix the strain gauge (a tie bar in the present embodiment) to the measuring object by being closely contacted.

The strain gauge 11 is applied and fixed to a strain gauge fixing member 12. A surface (hereinafter, referred to as an inner circumferential surface) 12a of the strain gauge fixing member 12 is formed in a curved plane having a substantially the same radius of curvature as an outer circumferential surface of the tie bar. The strain gauge is bonded firmly to the inner circumferential surface 12a by an adhesive or the like. A cable 14 protected by a cable protective member 13 extends from an outer surface opposite to the inner circumferential surface 12a of the strain gauge fixing member 12. The cable 14 is connected to the strain gauge 11 inside the strain gauge fixing member 12 so that a voltage can be applied to the strain gauge 11.

A belt insertion hole (not shown) extending almost in parallel to the inner circumferential surface 12a is formed in the strain gauge fixing member 12. A thin plate ring-like belt-like member 15 is inserted into the belt insertion hole as a belt-like retaining member. It should be noted that the belt-like member 15 is formed of a freely bendable material (having flexibility). A fixing part 15a is formed on both ends of the belt-like member 15. After winding the belt-like member 15 around the tie bar, the fixing part 15a is clamped and fixed using a bolt and a nut 17 by piercing washer springs 18. It should be noted that, in the present embodiment, a clamping device is constituted by the belt-like member 15 (retaining member) having the fixing part 15a, the bolt 16 and the nut 17.

Here, a washer spring 18 is provided as an elastic body between the fixing part 15a and the nut 17. When the bolt 16 and the nut 17 are fastened, the washer spring 18 is elastically deformed by being compressed. Accordingly, a clamping force of the belt- like member 15 is generated by a resilient restoration force of the washer spring 18. It should be noted that although the washer spring 18 is used as an elastic member in the present embodiment, various kinds of elastic members may be used such as, for example, a leaf spring, a coil spring, a rubber material, an elastic polymer material such as urethane, etc.

The fixing member 12 and the retaining member 15 may be integrally formed. If the fixing member 12 and the retaining member 15 are integrally formed, the retaining member 15 is constituted by a ring-like member having an inner diameter substantially the same as the outer diameter of the tie bar. And, since the strain gauge 11 is directly applied to the retaining member 15, the retaining member 15 has a function as the fixing member 12.

In the present embodiment, the belt-like member 15 is tightened so that the conical plate spring 18 is sufficiently compressed and an air gap slightly remains between fixing parts 15a on both sides. A scale part 15b as a clamping force detecting means extends from one of the fixing parts 15a toward the other of the fixing parts 15a, and a scale for clamping torque management is provided to the scale part 15b.

The scale of the scale part 15b is provided to be a measure to visually recognize a distance of the air gap between the fixing parts 15a. That is, when clamping the belt-like member 15, the bolt 16 and the nut 17 are fastened until the air gap between the fixing parts 15a reaches a predetermined distance. The predetermined distance is previously set as a distance of the air gap at the time when the conical plate spring 18 is sufficiently compressed. Thereby, even if an elongation is generated in the belt-like member 15 due to aging or temperature change, the clamping force is maintained at a sufficient level by a resilient restoration force of the conical plate spring 18. Accordingly, even if an elongation is generated in the belt-like member 15, the strain gauge 11 can make a close contact continuously with the outer circumferential surface of the tie bar, thereby a strain of the tie bar can be measured continuously for a long time.

An appropriate clamping force (that is, the resilient restoration force of the conical plate spring 18) may be maintained by further fastening the bolt 16 and the nut 17 periodically while checking the distance of the air gap between the fixing parts 15a. The scale may be a plurality of lines arranged at equal intervals, or a single line may be provided so as to be a measure of the initial distance of the air gap.

The belt-like member 15 slightly slides on the outer circumferential surface of the tie bar when being tightened. At that time, if a friction between the belt-like member 15 and the surface of the tie bar is large, the tie bar may get scratched or the strain of the belt-like member 15 may be uneven entirely and may be partly deflected. Thus, it is preferable to form the belt-like member 15 by a material of a small coefficient of friction. Or, it is preferable to apply a process to reduce a coefficient of friction to at least a surface contacting the tie bar in the surface of the belt-like member 15. As such a process, there is a process of coating a material of a low coefficient of friction such as a fluorocarbon resin.

In the present embodiment, it is preferable to select the belt-like member 15 according to the diameter of the tie bar by preparing a plurality of belt-like members 15 having different diameters (different lengths) to each other. It should be noted that a flexible string-like member may be used instead of the belt-like member 15. Additionally, although it is configured to provide a single strain gauge fixing member 12 to the belt-like member 15 so as to fix the single strain gauge 11 to the tie bar in the present embodiment, a number of the strain gauge fixing members 12 may be increased to provide a plurality of strain gauge fixing members 12 so as to fix a plurality of the strain gauges 11 to the single tie bar strain measuring device 10. Further, although an example was indicated in which the clamping device is provided to one position of the single belt-like member 15, it can be provided to a plurality of positions.

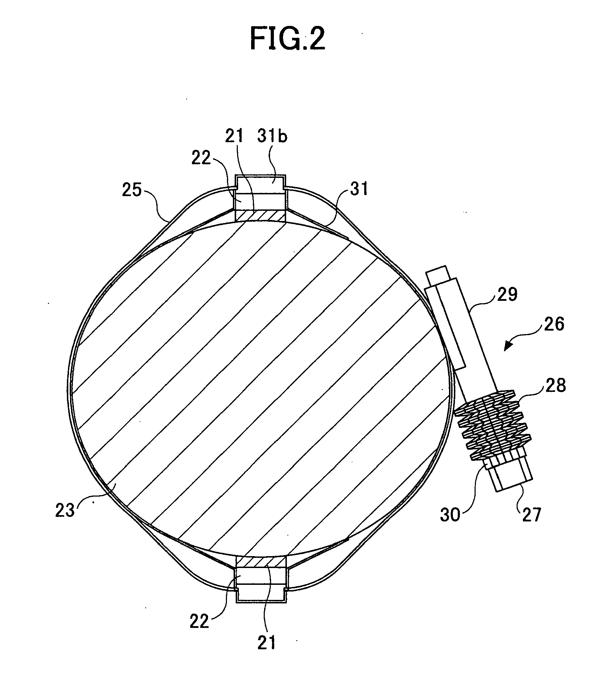

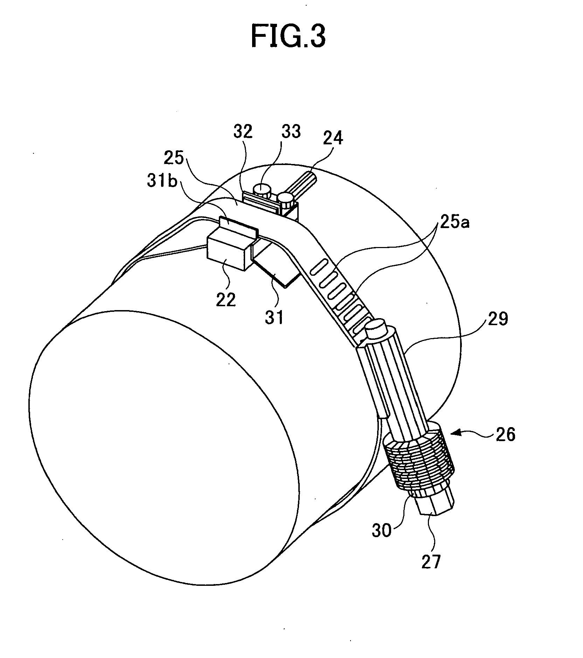

Next, a description will be given, with reference to FIG. 2 and FIG. 3, of a tie bar strain measuring device according to a second embodiment of the present invention. FIG. 2 is a side view of a tie bar strain measuring device 20 according to the second embodiment of the present invention. FIG. 3 is a perspective view of the tie bar strain measuring device according to the second embodiment of the present invention.

The tie bar strain measuring device 20 is one which presses and fixes a strain gauge 21, which is a strain sensor, to a part of an outer circumference of a tie bar 23, and has a strain gauge fixing member similar to the above-mentioned first embodiment. However, it is a structure in which two pieces of the strain gauge 21 are fixed simultaneously on the circumference of the outer circumferential surface of the tie bar 23, and two pieces of the strain gauge fixing member 22 are provided. The two pieces of the strain gauge fixing member 22 are arranged at positions opposite to each other in a diametrical direction on the circumference of the tie bar. Although the two pieces of the strain gauges 21 are attached in the present embodiment, one piece of the strain gauge 21 may be attached as in the above-mentioned first embodiment, or more than three pieces of the strain gauges 21 may be attached.

The strain gauge fixing member 22 is fixed to the outer circumferential surface of the tie bar 23 by being clamped by a belt-like member 25 as a retaining member of a belt-shape. That is, the strain gauge fixing member 22 is arranged in a state where it is sandwiched between the belt-like member 25 and the outer circumferential surface of the tie bar, and is fixed to the tie bar 23 by tightening the belt-like member 25. It is preferable that the surface of the strain gauge fixing member 22 to which the strain gauge is applied is a curved surface having a radius of curvature the same as the radius of curvature of the outer circumferential surface of the tie bar.

The clamping device 26 for tightening the belt-like member 25 is comprised of the belt-like member 25 having engaging holes 25a, a bolt 27, and a bolt retaining part 29 that holds the bolt 27. By turning the bolt 27, the thread part of the bolt 27 sequentially engages with the engaging holes 25a provided in the belt-like member 25, and, thereby, the belt-like member 25 is tightened. Such a tightening mechanism is widely used for a clamping mechanism for hoses and tubes. In the present embodiment, a plurality of conical plate springs 28 are provided between the head part of the bolt 27 and the bolt retaining part 29 of the clamping device 26. Additionally, a washer 30 is provided between the conical plate springs 28 and the bolt 27

The bolt retaining part 29 is fixed to an end side of the belt-like member 25 by penetrating through the conical plate springs 28, and the thread part of the bolt 27 is in engagement with the engaging holes 25a provided near the other end of the belt-like member 25 while the bolt 27 is rotatably supported by the bolt retaining part 29. Accordingly, when the bolt 27 is rotated in a direction of tightening, the other end of the belt-like member 25 is drawn by a screw action of the thread part of the bolt 27, which permits fastening of the belt-like member 25. In this case, since the conical plate springs 28 are provided between the head part of the bolt 27 and the bolt retaining part 29, the conical plate springs 28 are compressed while the belt-like member 25 is tightened. Accordingly, a resilient restoration force of the compressed conical plate springs 28 corresponds to the clamping force of the belt-like member 25.

As mentioned above, since the belt-like member 25 is tightened by the resilient restoration force of the conical plate springs 28, the clamping force can be maintained at a sufficient level by the resilient restoration force of the conical plate springs 28 that have been elastically deformed even if an elongation is generated in the belt-like member 25 due to aging or a temperature change. Accordingly, even if an elongation is generated in the belt-like member 25, the strain gauge 21 can be tightly contacted with the outer circumferential surface of the tie bar and a strain of the tie bar 23 can be measured continuously for a long period of time. It should be noted that although the conical plate springs 28 are used as an elastic member in the present embodiment, various kinds of elastic members may be used such as, for example, a plate spring, a coil spring, a rubber material, an elastic polymer material such as urethane, etc.

In the present embodiment, the strain gauge fixing member 22 is a separate part from the belt-like member 25, and the belt-like member 25 is brought into engagement with the strain gauge fixing member 22 and tightened in a state where the strain gauge fixing member 22 is arranged at a position appropriate for the tie bar 23. Accordingly, the two pieces of the strain gauge fixing member 22 must be arranged simultaneously at appropriate positions. Thus, in the present embodiment, before winding the belt-like member 25 around the tie bar 23, the two pieces of the strain gauge fixing member 22 are attached and temporarily fixed to the outer circumferential surface of the tie bar 23 by using a positioning member 31.

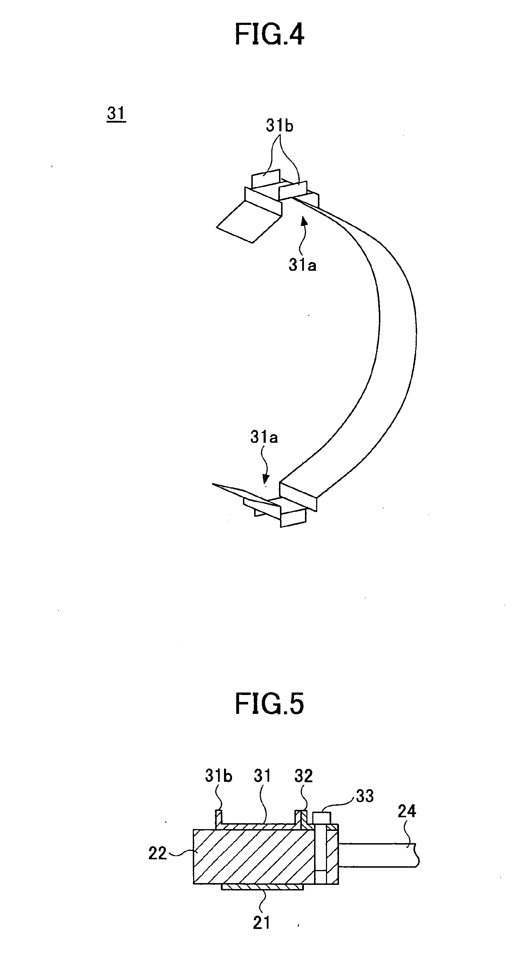

FIG. 4 is a perspective view of the positioning member 31. The positioning member 31 is formed of a thin plate such as a metal plate or the like, and curved with a radius of curvature slightly smaller than the radius of curvature of the outer circumferential surface of the tie bar 23 and is slightly longer than a half circumference of the tie bar 23. Accordingly, when the positioning member 31 is attached to the outer circumference of the tie bar 23, the positioning member 31 is retained in a stated where it accommodates the tie bar 23.

A retaining part 31a for retaining the strain gauge fixing member 22 is formed near both ends of the positioning member 31. The retaining part 31a is a part in which a concave part that is bent in a channel shape is formed so as to accommodate the strain gauge fixing member 22, and the positioning member 31 is attached to the tie bar 23 in a state where the strain gauge fixing member 22 is retained in the concave part.

The retaining part 31a is provided with belt guides 31b that are formed by bending toward opposite side to the concave part. It is so constructed that the belt-like member 25 is accommodated between the two upright belt guides 31b so as to be guided. The positioning member 31 is arranged at an appropriate position by abutting the belt guide 31b to a guide 32 fixed to the strain gauge fixing member 22 by guide fixing bolts 33 as shown in FIG. 5. Since a top surface of the strain gauge fixing member 22 is covered by the positioning member 31, a cable 24 connected to the strain gauge 21 extends from a side surface of the strain gauge fixing member 22.

As mentioned above, in the present embodiment, the two pieces of the strain gauge fixing member 22 (that is, two pieces of the strain gauge 21) can be fixed firmly to the tie bar 23 easily by temporarily attaching the two pieces of the strain gauge fixing member 22 (that is, two pieces of the strain gauge 21) at diametrically opposing positions of the tie bar 23 and thereafter winding the belt-like member 25 around the tie bar 23 from an upper side of the fixing members 22 and tightening. In this case, since the belt-like member 25 is guided by the belt guides 31b and arranged at an appropriate position on the top surface of each strain gauge fixing member 22, the strain gauge fixing members 22 can be clamped at appropriate positions surely by the belt-like member 25.

It should be noted that the positioning member 31 has a length to the extent that it is slightly longer than a half circumference of the tie bar 23, and the belt-like member 25 is wound around the tie bar 23 so that the clamping device 26 is arranged in a portion where the positioning member 31 does not extend. That is, the positioning member 31 is formed in a shape with which it does not interfere with said clamping device when the belt-like member 25 is tightened, so that the clamping by the belt-like member 25 can be done surely even if the positioning member 31 is provided.

Additionally, also in the present embodiment similar to the above-mentioned first embodiment, in order to visually recognize a degree of tightening of the belt-like member 25, the scale 25b as clamping force detecting means is provided to the belt-like member 25. For example, by previously checking a position of the end of the bolt retaining member on the scale 25b at which an appropriate clamping force can be acquired, the belt-like member 25 can be tightened with an appropriate tightening force while turning the bolt 27. Additionally, by checking the clamping force by the scale 25b and further tightening the bolt 27 periodically, the appropriate clamping force (that is, the resilient restoration force of the conical plate springs 28) may be maintained. The scale 25b may include a plurality lines arranged at equal intervals, or a single line may be provided so as to be merely a measure of the initial gap distance.

The belt-like member 25 slightly slides on the outer circumferential surface of the tie bar 23 and the outer surface of the positioning member 31. In this case, if a friction between the belt-like member 25 and the surface of the tie bar 23 is large, the tie bar 23 or the positioning member 31 may get scratched, or the belt-like member 25 cannot be uniform entirely and may be deflected partially. Thus, it is preferable to form the belt-like member 25 by a material having a small coefficient of friction. Or, it is preferable to apply a treatment to reduce a coefficient of friction to at least a surface which is brought into contact with the tie bar 23 and the positioning member 31 in the surface of the belt-like member 25. As such a treatment, there is a treatment to coat a material of a low coefficient of friction such as, for example, fluorocarbon resin.

In the present embodiment, a diameter of a loop formed by the belt-like member 25 can be adjusted by turning the bolt 27. Accordingly, one belt-like member 25 can deal with tie bars having different diameters.

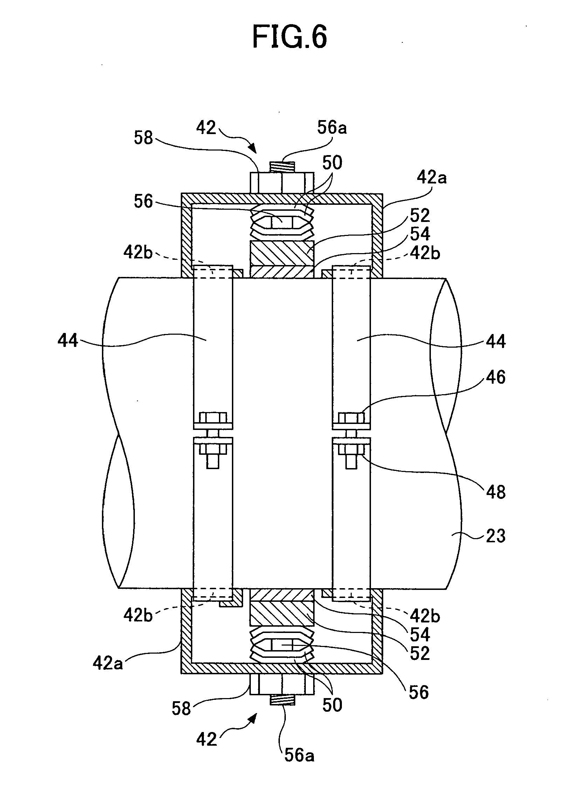

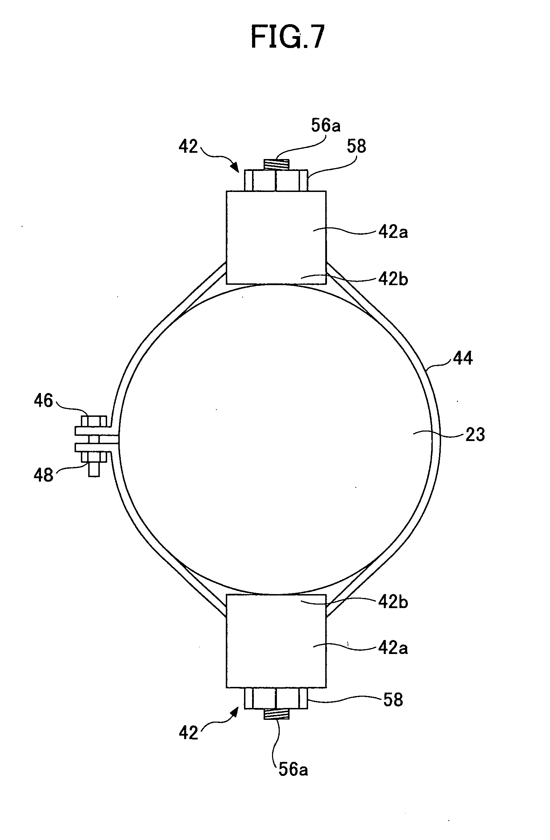

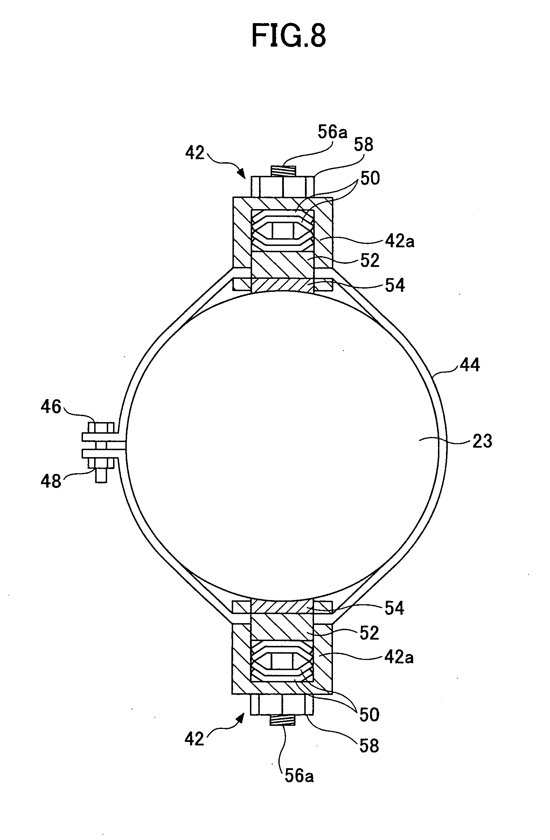

Next, a description will be given, with reference to FIG. 6 through FIG. 8, of a tie bar strain measuring device according to a third embodiment of the present invention. FIG. 6 is a front view of the tie bar strain measuring device according to the third embodiment of the present invention. FIG. 7 is a side view of the tie bar strain measuring device shown in FIG. 6. FIG. 8 is a cross-sectional view of the tie bar strain measuring device shown in FIG. 6.

The tie bar strain measuring device 40 according to the third embodiment of the present invention has two pieces of elastic body support members 42 and two pieces of retaining members 44. The elastic body support member 42 has a fixing part 42b as a part of a body part 42a. The retaining member 44 has the same structure as the belt-like member 15 shown in FIG. 1, and is wound around the tie bar 23 via the fixing part 42b and has a function to press the fixing part 42b against the tie bar 23. That is, the retaining member 44 is a belt-like member formed in a generally circular form which matches the outer diameter of the tie bar 23, and the fixing part 42b, that is, the body part 42a can be pressed against the tie bar 23 by reducing the diameter by tightening the opposite ends by a bolt 46 and a nut 48. It should be noted that, in the present embodiment, a clamping device is constituted by the retaining members 44, the elastic body support members 42, bolts 46 and the nuts 48. In this case, since tightening is carried out at one position in a circumferential direction of the retaining member 44, the strain gauge 54 can be clamped, without loosing balance when tightening, better than a structure to tighten at two positions such as in a split flange.

The body part 42a of the elastic body support member 42 has a hollow structure such as shown in FIG. 8, and a plurality of plate springs (conical plate springs) 50 as an elastic member, a fixing member 52 and a strain gauge 54 as a strain sensor are accommodated therein. The fixing member 52 is a rigid member provided for pressing the strain gauge 54 against the tie bar 23 by a spring force of the plate springs 50.

Each of the conical plate springs 50 has a through hole at a center thereof, and a support column 56. extends through the through hole. Thereby, the plurality of plate springs 50 are positioned onto the fixing member 52. The support column 56 has a bolt part 56a extending outwardly by passing through the body part 42a of the elastic body support member 42. The support column 56 is fixed to the body part 42a by screwing a nut member 58 to the bolt part 56a and fastening by sandwiching the body part 42a. It is preferable that the length of the support column is such that the plate spring 50 nearest to the fixing member 52 is inserted into the through hole before the plate springs 50 are compressed and it does not contact the top surface of the fixing member 52 when the plate springs 50 are compressed. Or, a concave part may be provided on the top surface of the fixing member 52 so that the lower end part of the support column 56 is accommodated in the concave part.

When no load is applied to the plate springs 50 (before clamping by the retaining member 44 is carried out), the strain gauge 54 is in a state where it is out of the accommodating part of the body part 42a. Then, it is configured that, when the body part 42a is brought into contact with the outer circumferential surface of the tie bar 23 by tightening the retaining member 44, a predetermined bending is generated in the plate springs 50. Accordingly, when the body part 42a is in contact with the outer circumferential surface of the tie bar 23 by tightening the retaining member 44, the strain gauge 54 is pressed against the tie bar 23 by a predetermined pressing force generated by the plate springs 50.

The pressing force of the plate springs 50 can be adjusted or changed by changing a size of the elastic body support member 42 or a thickness of the fixing member 52. Accordingly, a size of the elastic body support member 42 or a thickness of the fixing member 52 as an index (scale) indicating strength of the pressing force may be indicated clearly on a surface of the elastic body support member 42.

Additionally, as shown in a lower left part of FIG. 6, the retaining member 44 may be sandwiched by folding an extreme end portion of the body part 42a. In this case, since the body part 42a is attached to the retaining member 44, there is an effect that a work for incorporating into the tie bar is easily carried out. The folded portion of the body part 42a may be welded or brazed to the retaining member 44.

It should be noted that, also in the present embodiment similar to the above-mentioned first embodiment, by checking a gap distance between opposite ends of the retaining member 44 and further tightening the bolt 46 and the nut 48 periodically, an appropriate clamping force (that is, the resilient restoration force of the conical plate springs 50) may be maintained. Additionally, it is preferable to apply a treatment to reduce a coefficient of friction to at least a surface which is brought into contact with the tie bar 23 in the surface of the retaining member (belt-like member) 44. Further in the present embodiment, it is preferable to prepare a plurality of retaining members 44 having different diameters (different lengths) to each other so as to select the retaining member 44 according to the diameter of the tie bar 23. It should be noted that a flexible string member may be use instead of the belt-like retaining member 44.

Further, when the body part 42a and the retaining member 44 are fixed by welding or the like, the plurality of strain gauges 54 can be attached to positions on the tie bar 23 always with an interval of a constant angle.

Additionally, although the plate springs 50 are used as an elastic member in the present embodiment, one which can generate an elastic force such as a coil spring, a rubber material, an elastic resin material, etc., may be used if necessary.

Additionally, although two pieces of the strain gauge 54 are fixed to the tie bar 23 by using the two pieces of the elastic body retaining member 42 in the present embodiment, the number of the elastic body retaining members 42 may be one and one piece of strain gauge 54 may be attached, or the number of the elastic body retaining member 42 may be equal to or greater than three and three or more pieces of the strain gauge 54 may be attached.

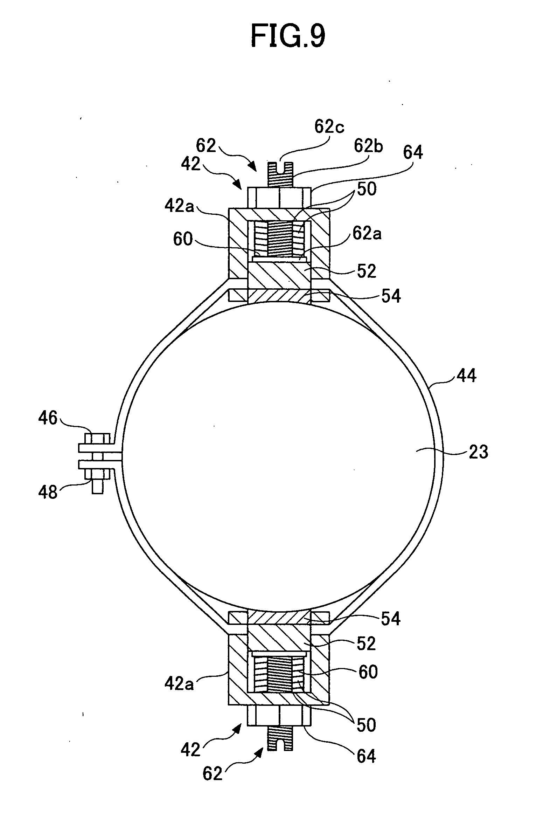

Next, a description will now be given, with reference to FIG. 9, of a tie bar strain measuring device according to a fourth embodiment of the present invention. FIG. 9 is a cross-sectional view of the tie bar strain measuring device according to the fourth embodiment of the present invention. In FIG. 9, parts that are the same as the parts shown in FIGS. 6 through 8 are given the same reference numerals, and descriptions thereof will be omitted.

In the tie bar strain measuring device according the present embodiment, the plate springs 50 shown in FIG. 6 are replaced by a coil spring 60. The coil spring 60 is arranged so that it extends through between a head part 62a of a bolt member 62 and the body part 42a in a state where the bolt member 60 extends therethrough. A thread part 62b of the bolt member 60 protrudes outside by penetrating through the body member 42a, and a nut member 64 is screwed to the protruding part. In order to prevent the bolt member 62 from being rotated when fastening or loosening the nut member, a slit (a groove for preventing rotation) 62c is formed on the end of the thread part 62b.

In order to attach the tie bar strain measuring device having the above-mentioned structure to the tie bar 23, the nut member 64 is fastened first so as to have the coil spring 60 in a completely compressed state or a state close to that by fastening the nut member 64. Since the coil spring 60 is supported by the head part 62a of the bolt member 62, when the nut member 64 is fastened and the head part 62a of the bolt member 62 is lifted, the coil spring 60 is compressed between the head part 62a and the body part 42a.

In a state where the head part 62a is lifted, the retaining member 44 is wound around the tie bar 23 and tightened completely. In this state, the head part 62a is lifted so that a space is formed between the outer circumferential surface and the head part 62a of the bolt member 62. The strain gauge 54 and the fixing member 52 can be easily arranged in that space. When the nut member 64 is loosened after the strain gauge 54 and the fixing member 52 are arranged under the head part 62a, the head part 62a moves down and contacts the top surface of the fixing member 52. When the net member 64 is further loosened from that state, a spring load of the coil spring 60, that is, a restoration force of the coil spring 60 is applied to the fixing member 52. According to the spring load, the strain gauge 54 is attached to the tie bar 23 in a pressed state. Accordingly, when the tie bar strain measuring device functions while being attached to the tie bar 23, the nut member 64 is in a loosened state.

As mentioned above, according to the tie bar strain measuring device according to the present embodiment, the strain gauge 54 can be easily attached. Additionally, there also is an effect that the position adjustment of the strain gauge 54 can be easily carried out by merely lifting the head part of the bolt member 62 by fastening the nut member 64.

The pressing force of the coil spring 60 can be adjusted or changed by changing the size of the elastic body support member 42 or the thickness of the fixing member 52. Accordingly, the size of the elastic body support member 42 or the thickness of the fixing member 52 may be indicated on a surface of the elastic body support member 42.

The present invention is not limited to the specifically disclosed embodiments, and variations and modifications may be made without departing from the scope of the present invention.

The present application is based on Japanese priority application No. 2005-042538 filed February 18, 2005, the entire contents of which are hereby incorporated herein by reference.

### INDUSTRIAL APPLICABILITY

The present invention is applicable to a stain measuring device for measuring a strain of a rod-like member such as a tie bar of an injection molding machine and a fixing method of a strain measuring element.

## Claims

1. A strain measuring device that measures a strain of a rod-like member, comprising:
a fixing member to which a strain measuring element is fixed;
a clamping device having a retaining member to retain the fixing member while pressing against an outer circumferential surface of said rod-like member so as to clamp the retaining member on the outer circumference of said rod-like member; and
an elastic member provided to the clamping device to generate a pressing force applied to said fixing member by a resilient restoration force.

2. The strain measuring device as claimed in claim 1, wherein said fixing member includes a positioning member that position said strain measuring element on the outer circumference surface by engaging with the outer circumferential surface of said rod-like member.

3. The strain measuring device as claimed in claim 1, wherein two pieces of said strain measuring elements are provided and arranged at diametrically opposing positions by said positioning member in a circumferential direction of said rod-like member.

4. The strain measuring device as claimed in claim 2, wherein said positioning member is formed in a shape to not interfere with said clamping device when said retaining member is clamped.

5. The strain measuring device as claimed in claim 1, wherein a process to reduce a coefficient of friction is applied to a surface of said retaining member.

6. The strain measuring device as claimed in claim 1, wherein said retaining member has clamping force detecting means for detecting a state of clamping.

7. The strain measuring device as claimed in claim 1, wherein said clamping device has an elastic body support member that supports said elastic member, and said elastic member is provided between the elastic body support member and said fixing member.

8. The strain measuring device as claimed in claim 7, including a support column attached to said elastic body support member and extending between said elastic member and said fixing member, wherein said elastic member is positioned by the support column.

9. The strain measuring device as claimed in claim 7, including a bolt member attached to said elastic body support member and extending between said elastic member and said fixing member, wherein said elastic member is arranged between a head part of the bolt member and said elastic body support member, an end part of a thread part of said bolt member extends by penetrating through said elastic body support member, and a nut member is engaged with an end part of the thread part.

10. A fixing method of a strain measuring element that measures a strain of a rod-like member, comprising:
fixing the strain measuring element to a fixing member;
sandwiching the fixing member between an outer circumferential surface of said rood-like member and a retaining member; and
clamping said retaining member by a clamping force generated by a resilient restoration force of an elastic member so as to retain said strain measuring element while pressing against the outer circumferential surface of said rod-like member.

11. A fixing method of a strain measuring element that measures a strain of a rod-like member, comprising:
fixing the strain measuring element to a fixing member;
attaching the fixing member to an elastic body support member via an elastic member;
attaching a retaining member to an outer circumference of said rod-like member and sandwiching the elastic body support member between an outer circumferential surface of said rod-like member and the retaining member; and
retaining said strain measuring element while pressing against the outer circumferential surface of said rod-like member via said elastic member by a resilient restoration force of said elastic member by clamping said retaining member.

12. A fixing method of a strain measuring element that measures a strain of a rod-like member, comprising:
attaching a retaining member, to which an elastic body support member is attached, to an outer circumference of said rod-like member;
arranging a fixing member, to which the strain measuring element is fixed, between an elastic member supported by the elastic body support member and said rod-like member; and
causing said elastic member to elongate so as to have a restoration force of said elastic member to act on said fixing member by weakening a compression of said elastic member that has been compressed.
